# EUROPÄISCHE PATENTANMELDUNG

(11) **EP 2 774 488 A1**
(43) Veröffentlichungstag der Anmeldung: **10.09.2014**
(21) Anmeldenummer: 14156058.1
(22) Anmeldetag: 21.02.2014
(51) Int. Cl.: A23G 9/30, A47J 43/28

(54) **Vorrichtung zum Reinigen eines Besteckteils, vorzugsweise zum Reinigen eines Portionierers für an Kunden abzugebende Lebensmittel, insbesondere zum Reinigen eines Eisportionierers in einem Eiscafé-Betrieb**

(30) Priorität: 08.03.2013 DE 202013002203 U
(71) Anmelder: Ienco, Ottaviano, 27793 Wildeshausen (DE)
(72) Erfinder: Ienco, Ottaviano, 27793 Wildeshausen (DE)
(74) Vertreter: Jabbusch, Matthias

(57) **Zusammenfassung**

Bei einer Vorrichtung zum Reinigen eines Besteckteils (5), vorzugsweise zum Reinigen eines Portionierers für an Kunden abzugebende Lebensmittel, insbesondere zum Reinigen eines Eisportionierers (5) in einem Eiscafe-Betrieb, umfassend zumindest ein Wasserbecken (4), dem vorzugsweise zumindest ein Wasserhahn zugeordnet ist, ist vorgesehen, dass sie weiterhin zumindest eine wenigstens eine Austrittsdüse (9, 10) für Druckluft umfassende Trocknungseinrichtung für das Besteckteil (5) aufweist.

Diese Vorrichtung bewirkt eine Erhöhung der hygienischen Zustände bei der Abgabe von losen Lebensmitteln an Kunden.

## Beschreibung

Die Erfindung betrifft eine Vorrichtung zum Reinigen eines Besteckteils, vorzugsweise zum Reinigen eines Portionierers für an Kunden abzugebende Lebensmittel, insbesondere zum Reinigen eines Eisportionierers in einem Eiscafé-Betrieb, umfassend zumindest ein Wasserbecken, dem vorzugsweise zumindest ein Wasserhahn zugeordnet ist.

Verschiedene Lebensmittel werden in loser Form an Kunden abgegeben, beispielsweise Kuchenstücke, Süßigkeiten oder auch Eis. Dabei können Schieber, Kellen, Bratwender als Besteckteile eingesetzt werden. Kugeleis wird in Straßencafés oder an Eisständen mit einem Portionierlöffel aus verschiedenen Vorratsbehältnissen entnommen und je nach Kundenwunsch in eine Waffel oder in einen Becher eingelegt. Nach diesem Einlegen wird der Portionierer regelmäßig abgewaschen, dazu dient das Wasserbecken. Das Wasserbecken kann auch einen Wasserhahn haben, mit dem ein Wasserstrahl gegen den Portionierer geführt wird.

Nach dem Abwaschen eines Besteckteils, wie des Portionierers, wird dieses häufig gegen ein Geschirrtuch geklopft, das auf dem Tresen des z. B. Eiscafe-Betriebes liegt. Das Geschirrhandtuch liegt dort für Stunden, immer wieder erfolgt ein Klopfen des Portionierers auf das Handtuch. Dies hat jedoch bereits Eisreste und Wasser aufgenommen und ist den in der Luft vorhandenen Keimen über längere Zeit ausgesetzt. Das immer wieder Aufschlagen des Portionierers auf diesem Handtuch führt daher zu einer Belastung des Portionierers durch Keime.

Der Erfindung liegt die Aufgabe zugrunde, eine Vorrichtung der eingangs genannten Gattung aufzuzeigen, welche eine Erhöhung der hygienischen Zustände bei der Abgabe von losen Lebensmitteln an Kunden bewirkt.

Diese Aufgabe ist erfindungsgemäß dadurch gelöst, dass die Vorrichtung zum Reinigen des Portionierers weiterhin zumindest eine wenigstens eine Austrittsdüse für Druckluft umfassende Trocknungseinrichtung für das Besteckteil aufweist.

Mit der erfindungsgemäßen Vorrichtung kann der z. B. Portionierer wie im Stand der Technik üblich mit Hilfe von Wasser zunächst gereinigt werden. Anstelle ihn dann aber auf einem Handtuch auszuklopfen, erfolgt ein Trocknen des Portionierers in der Trocknungseinrichtung. Diese weist eine Austrittsdüse für Druckluft auf, so dass Druckluft in beschleunigter Form gegen den Portionierer geführt werden kann, um von diesem Wassertröpfchen abzustreifen und eine Trocknung herbeizuführen. Das kann ähnlich funktionieren wie das Trocknen eines Autos in einer Waschanlage durch das Hinzuführen beschleunigter Luft über entsprechende Düsen.

Der getrocknete Portionierer ist nicht auf dem Geschirrhandtuch auszuklopfen, er kann vielmehr in dieser getrockneten Form in einem gekühlten Bereich einer Eisvitrine abgelegt werden, um ihn gegen den Besatz mit aktiven Keimen zu schützen.

Durch das Nicht-in-Kontakt-geraten des Portionierers mit einem Geschirrhandtuch, das über Stunden der Atmosphäre ausgesetzt ist und das insbesondere noch Eisreste aufnimmt, wird die Hygiene bei der Verabreichung der losen Lebensmittel signifikant erhöht. Neben Besteckteilen können auch kompakte Geschirrteile mit der erfindungsgemäßen Vorrichtung behandelt werden.

Die Austrittsdüse kann beispielsweise mit einer Druckluft von 4 bis 5 bar beaufschlagt sein, mit einer derartig beschleunigten Druckluft ist eine Trocknung des Portionierers in kurzer Zeit erreichbar, so dass sich auch keine Verzögerungen im Betriebsablauf ergeben.

Eine nächste Weiterbildung der Erfindung sieht vor, dass die Trocknungseinrichtung zwei Austrittsdüsen hat, wobei beide Austrittsdüsen in einer vertikalen Achse übereinander angeordnet und mit ihren Düsenöffnungen einander zugekehrt sind. Mit zwei Austrittsdüsen kann der Portionierer zeitgleich von zwei Seiten her mit Druckluft beaufschlagt werden. Hat ein Portionierer eine Löffelform, so wird die Innenseite des Löffels beispielsweise von unten und die Außenseite des Löffels beispielsweise von oben mit Druckluft beaufschlagt, so dass die Übereinanderanordnung der beiden Austrittsdüsen und ihre einander Zugekehrtheit ein Einführen des Portionierers in den Zwischenraum zwischen beiden Austrittsdüsen ermöglicht. Von oben wie von unten wird Druckluft zugeführt, am Portionierer anhaftende Tropfen können weggeführt werden.

Die obere Austrittsdüse kann dabei mehrere Düsenöffnungen aufweisen, welche eine gleichmäßige allseitige Beaufschlagung des Portionierers mit Druckluft ermöglichen. Gerade in einem Eiscafé-Betrieb kann ein Portionierer eine Halbhohlkugelform aufweisen, durch mehrere Düsenöffnungen können alle Bereiche der Kugelaußenfläche mit Druckluft beaufschlagt werden. Die obere Austrittsdüse ist dabei beispielsweise am freien Ende einer galgenartig verlaufenden Druckluftleitung angeordnet, dieser Verlauf der Druckluftleitung ermöglicht ein Zuführen des Portionierers in einen Bereich unterhalb der oberen Austrittsdüse, ohne dass die Druckluftleitung im Weg ist.

Der unteren Düse ist vorzugsweise ein Auffangtellerelement für Wasser zugeordnet, das einen Auffangbereich für wegfliegende Wassertropfen ausbildet. Aufgefangenes Wasser kann dann beispielsweise in das Wasserbecken zurückgeführt werden, indem ein entsprechender Ablauf vorgesehen ist.

Zur weiteren Ausbildung kann noch vorgesehen sein, dass in der Zuleitung der Druckluft ein Filter angeordnet ist. Auf diese Weise ist sichergestellt, dass saubere Druckluft der Trocknungseinrichtung zugeführt wird. Schließlich kann noch vorgesehen sein, dass die Zuleitung der Druckleitung an einen ölfreien Luftkompressor angeschlossen ist, um auch hier eine Verunreinigung des Portionierers auszuschließen.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht eines Thekenbereiches in einem Eiscafé mit Wasserbecken nach dem Stand der Technik, und
- Fig. 2:: eine Seitenansicht der erfindungsgemäßen Vorrichtung.

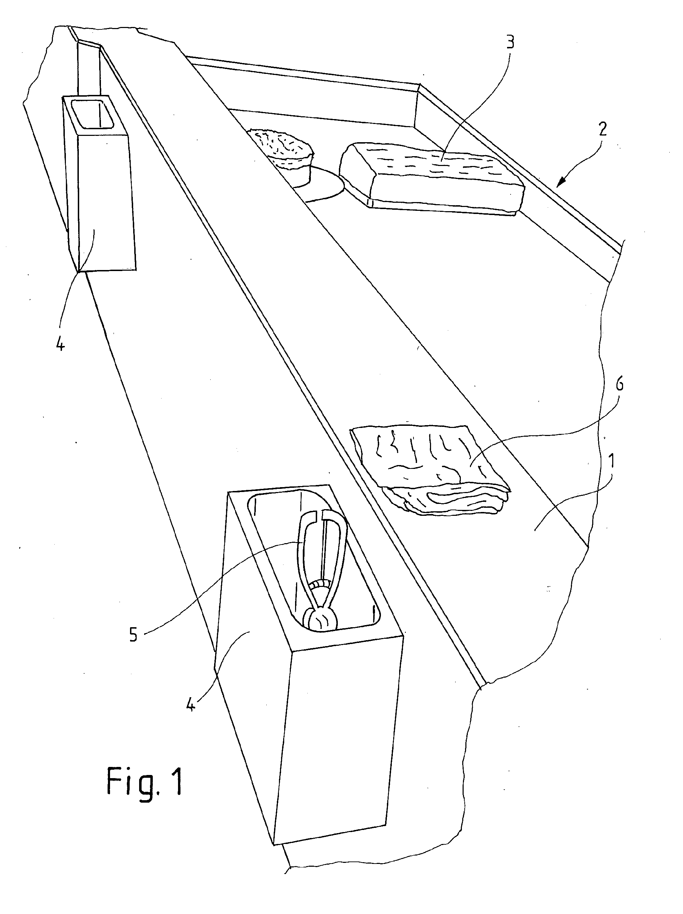

Aus Fig. 1 ist ein Thekentresen 1 zu erkennen, welcher als längserstreckter Bereich ausgebildet ist. An seiner den Kunden zugekehrten Seite ist dem Tresen 1 eine Kühlvitrine 2 zugeordnet, in der Kuchen 3 angeordnet sind.

Auf der Bedienerseite des Tresens 1 sind an diesem zwei Wasserbecken 4 angeordnet, welche mit Wasserleitungen und nicht weiter dargestellten Wasserhähnen ausgerüstet sind. Im vorderen Wasserbecken 4 ist ein Besteckteil 5, nämlich ein Portionierer, für Eis abgelegt.

Im Stand der Technik nach Fig. 1 werden im Bereich eines Wasserbeckens 4 Geschirrhandtücher 6 oder ähnliche textile Produkte zum Trocknen des Portionierers eingesetzt. Dieser kann nach dem Herausnehmen aus dem Wasserbecken 4 zwei-, dreimal auf das Geschirrhandtuch 6 geklopft werden, um dann nach Kundenwunsch die eine oder andere Kugel aus bereitstehenden Behältern für Speiseeis zu formen.

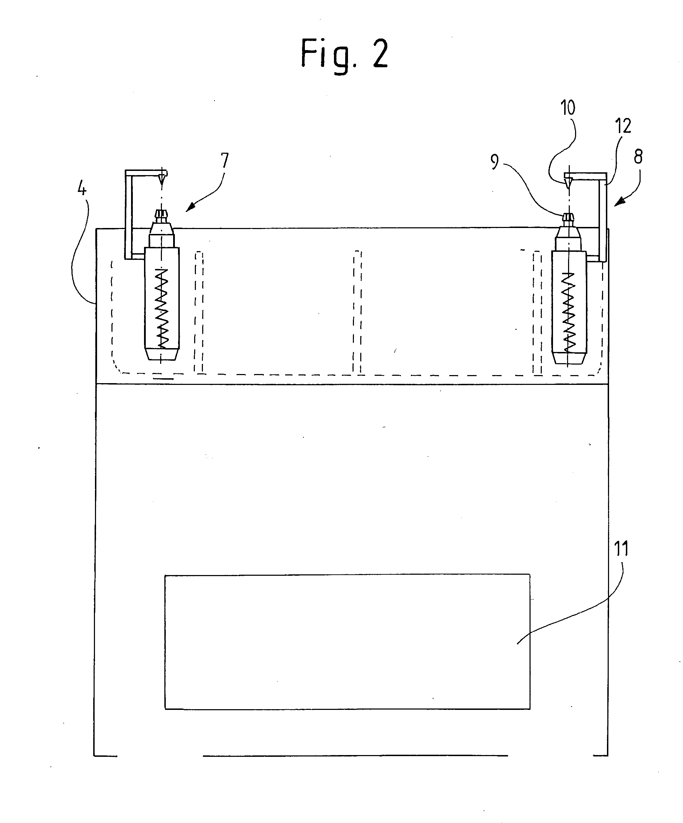

Fig. 2 zeigt ein Wasserbecken 4, in das neben einem Wasserhahn 7 eine Trocknungseinrichtung 8 eingebracht ist. Die Trocknungseinrichtung 8 hat eine untere Austrittsdüse 9 und eine obere Austrittsdüse 10. Zwischen beiden Austrittsdüsen 9, 10 kann das Besteckteil 5 gehalten werden, um seine mit Lebensmitteln, hier dem Eis, in Kontakt geratenen Abschnitte mit Druckluft zu beaufschlagen. Die Druckluft wird in einem Kompressor 11 erzeugt und über Druckluftleitungen der Trocknungseinrichtung 8 zugeführt. Die Druckluftleitung 12 für die obere Austrittsdüse 10 ist galgenartig ausgebildet.

## Patentansprüche

1. Vorrichtung zum Reinigen eines Besteckteils, vorzugsweise zum Reinigen eines Portionierers für an Kunden abzugebende Lebensmittel, insbesondere zum Reinigen eines Eisportionierers in einem Eiscafe-Betrieb, umfassend zumindest ein Wasserbecken, dem vorzugsweise zumindest ein Wasserhahn zugeordnet ist,
**dadurch gekennzeichnet,**
**dass** sie weiterhin zumindest eine wenigstens eine Austrittsdüse (9, 10) für Druckluft umfassende Trocknungseinrichtung (8) für das Besteckteil (5) aufweist.

2. Vorrichtung nach Anspruch 1, **dadurch gekennzeichnet, dass** die Austrittsdüse (9, 10) mit einer Druckluft von 4 bis 5 bar beaufschlagt ist.

3. Vorrichtung nach Anspruch 1 oder 2, **dadurch gekennzeichnet, dass** die Trocknungseinrichtung (8) zwei Austrittsdüsen (9, 10) hat, wobei beide Austrittsdüsen (9, 10) in einer vertikalen Achse übereinander angeordnet und mit ihren Düsenöffnungen einander zugekehrt sind.

4. Vorrichtung nach Anspruch 3, **dadurch gekennzeichnet, dass** die obere Austrittsdüse (10) mehrere Düsenöffnungen hat.

5. Vorrichtung nach Anspruch 4, **dadurch gekennzeichnet, dass** die obere Austrittsdüse (10) am freien Ende einer galgenartig verlaufenden Druckluftleitung (12) angeordnet ist.

6. Vorrichtung nach einem der Ansprüche 3 bis 5, **dadurch gekennzeichnet, dass** der unteren Düse (9) ein Auffangtellerelement für Wasser zugeordnet ist.

7. Vorrichtung nach einem der vorhergehenden Ansprüche, **dadurch gekennzeichnet, dass** in der Zuleitung der Druckluft ein Filter angeordnet ist.

8. Vorrichtung nach einem der vorhergehenden Ansprüche, **dadurch gekennzeichnet, dass** die Zuleitung der Druckluft an einen ölfreien Luftkompressor (11) angeschlossen ist.
